(19) Europäisches Patentamt
European Patent Office
Office européen des brevets

(11) **EP 4 656 419 A1**

(12) **EUROPEAN PATENT APPLICATION**
published in accordance with Art. 153(4) EPC

(43) Date of publication:
**03.12.2025 Bulletin 2025/49**

(21) Application number: **23929917.5**

(22) Date of filing: **31.10.2023**

(51) International Patent Classification (IPC):
**B60G 17/016** (2006.01)

(52) Cooperative Patent Classification (CPC):
**B60G 17/016; B60G 17/019; B60G 17/08**

(86) International application number:
**PCT/CN2023/128510**

(87) International publication number:
**WO 2024/198347 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 CN 202310380800**

(71) Applicant: **BYD Company Limited**
**Shenzhen, Guangdong 518118 (CN)**

(72) Inventors:
• **LIAN, Yubo**
**Shenzhen, Guangdong 518118 (CN)**

• **LIAO, Yinsheng**
**Shenzhen, Guangdong 518118 (CN)**
• **ZHANG, Hongzhou**
**Shenzhen, Guangdong 518118 (CN)**
• **LUO, Renyu**
**Shenzhen, Guangdong 518118 (CN)**
• **LI, Xie**
**Shenzhen, Guangdong 518118 (CN)**

(74) Representative: **Taor, Simon Edward William**
**Venner Shipley LLP**
**200 Aldersgate**
**London EC1A 4HD (GB)**

(54) **VEHICLE CONTROL METHOD AND APPARATUS, AND SUSPENSION SYSTEM, CONTROLLER, VEHICLE AND MEDIUM**

(57)    A vehicle control method and apparatus, a suspension system, a controller, a vehicle, and a medium. The method includes: determining a first wheel of the vehicle, where the first wheel is a wheel with zero target load; and adjusting a position of a center of mass of the vehicle by adjusting a vehicle body posture of the vehicle, so that a load of the first wheel is zero.

```
┌─────────────────────────────────────────────┐
│ Determine a first wheel of a vehicle, where  │      S3100
│ the first wheel may be a wheel whose target   │
│ load is zero                                  │
└─────────────────────────────────────────────┘
                      │
                      ▼
┌─────────────────────────────────────────────┐
│ Adjust a position of a center of mass of the │      S3200
│ vehicle by adjusting a vehicle body posture,  │
│ so that a load of the first wheel is zero     │
└─────────────────────────────────────────────┘
```

FIG. 3

EP 4 656 419 A1

# Description

## CROSS-REFERENCE TO RELATED APPLICATIONS

This application claims priority to Chinese Patent Application No. 202310380800.X, filed on March 31, 2023 and entitled "VEHICLE CONTROL METHOD AND APPARATUS, SUSPENSION SYSTEM, CONTROLLER, VEHICLE, AND MEDIUM", which is incorporated herein by reference in its entirety.

## TECHNICAL FIELD

The present disclosure relates to the field of electric vehicle control technologies, and in particular, to a vehicle control method and apparatus, a suspension system, a controller, a vehicle, and a medium.

## BACKGROUND

A tire blowout means that a tire loses most of air in a very short period of time. Related research shows that a large quantity of vehicle traffic accidents are caused by tire blowouts.

After a tire blowout of a vehicle occurs, a vehicle body tilts and deviates, and handling stability of the vehicle deteriorates. Consequently, the vehicle cannot travel normally, and life safety of a driver is severely threatened.

## SUMMARY

An objective of embodiments of the present disclosure is to provide a technical solution for controlling three-wheel traveling of a vehicle.

According to a first aspect of an embodiment of the present disclosure, a vehicle control method is provided and includes: determining a first wheel of a vehicle, where the first wheel is a wheel with zero target load; and adjusting a position of a center of mass of the vehicle by adjusting a vehicle body posture of the vehicle, so that a load of the first wheel is zero.

Optionally, the adjusting the position of the center of mass by adjusting the vehicle body posture of the vehicle includes: adjusting the position of the center of mass in a target area, where the target area is an area other than an area of the first wheel.

Optionally, the target area is defined, so that in a length direction of the vehicle, a distance between the first wheel and the center of mass is greater than a distance between a third wheel and the center of mass, where the third wheel and the first wheel are located on a same side of the vehicle; or the target area is defined, so that in a width direction of the vehicle, a distance between the first wheel and the center of mass is greater than a distance between a second wheel and the center of mass; where the second wheel and the first wheel are located on a same connection axle of the vehicle.

Optionally, the adjusting the position of the center of mass by adjusting the vehicle body posture of the vehicle includes: adjusting the vehicle body posture by adjusting a vehicle body height corresponding to another wheel, where the another wheel is a wheel in the vehicle other than the first wheel.

Optionally, the adjusting the position of the center of mass by adjusting the vehicle body posture of the vehicle, so that the load of the first wheel is zero includes: adjusting the center of mass to be within the target area, where the target area is the area other than the area of the first wheel; and adjusting the position of the center of mass in the target area, so that the load of the first wheel is zero.

Optionally, the adjusting the center of mass to be within the target area includes: adjusting a vehicle body height corresponding to the second wheel of the vehicle to a first target height; and adjusting a vehicle body height corresponding to the third wheel of the vehicle to a second target height, where the second wheel and the first wheel are located on the same connection axle of the vehicle, the third wheel and the first wheel are located on the same side of the vehicle, and the first target height is greater than the second target height.

Optionally, the adjusting the position of the center of mass in the target area, so that the load of the first wheel is zero includes: lowering a vehicle body height corresponding to a fourth wheel of the vehicle, so that the load of the first wheel is zero, where the fourth wheel and the first wheel are disposed diagonal to each other in the vehicle.

Optionally, the method further includes: adjusting a tilt angle of a vehicle body relative to a ground, so that an absolute value of the tilt angle is less than or equal to an angle threshold; and the adjusting the position of the center of mass by adjusting the vehicle body posture, so that the load of the first wheel is zero includes: adjusting the position of the center of mass and the tilt angle until the absolute value of the tilt angle is less than or equal to the angle threshold and the load of the first wheel is zero.

Optionally, the adjusting the tilt angle of the vehicle body relative to the ground, so that the absolute value of the tilt angle is less than or equal to the angle threshold includes: detecting the tilt angle of the vehicle body relative to the ground; and when the absolute value of the tilt angle is greater than the angle threshold, adjusting the vehicle body height corresponding to the fourth wheel of the vehicle until the absolute value of the tilt angle is less than or equal to the angle threshold, where the fourth wheel and the first wheel are disposed diagonal to each other in the vehicle.

Optionally, the method further includes: controlling the first wheel to be lifted when the load of the first wheel is zero, so that the first wheel leaves the ground.

According to a second aspect of the present disclosure, a suspension system is provided and includes: an independent suspension, where the independent suspension includes a shock absorber connecting a vehicle body of a vehicle and each wheel; and a control apparatus, where the control apparatus is configured to determine a first wheel of the vehicle and control an action of at least one shock absorber to adjust a position of a center of mass of the vehicle, so that a load of the first wheel is zero, where the first wheel is a wheel with zero target load.

According to a third aspect of the present disclosure, a controller is provided and includes a processor and a memory, where the memory is configured to store a computer program, and the processor is configured to execute the method according to the first aspect of the present disclosure under control of the computer program.

According to a fourth aspect of the present disclosure, a vehicle is provided and includes the suspension system according to the second aspect of the present disclosure or the controller according to the third aspect of the present disclosure.

According to a fifth aspect of the present disclosure, a vehicle control apparatus is provided and includes: a wheel determining module, configured to determine a first wheel of a vehicle, where the first wheel is a wheel with zero target load; and a posture adjustment module, configured to adjust a position of a center of mass of the vehicle by adjusting a vehicle body posture of the vehicle, so that a load of the first wheel is zero.

According to a sixth aspect of the present disclosure, a computer-readable storage medium is provided and stores a computer program. When the computer program is executed by a processor, the method according to the first aspect of the present disclosure is implemented.

According to embodiments of the present disclosure, the position of the center of mass of the vehicle is adjusted by adjusting the vehicle body posture of the vehicle, so that the load of the first wheel is zero. This allows the vehicle to maintain vehicle body balance during three-wheel traveling, ensure safe traveling of the vehicle, and protect personal safety of a driver.

Other features and advantages of the present disclosure become apparent based on the following detailed descriptions of exemplary embodiments of the present disclosure with reference to the accompanying drawings.

## BRIEF DESCRIPTION OF THE DRAWINGS

FIG. 1 is a diagram of a composition structure of a suspension system that can be used to implement a vehicle control method according to an embodiment of the present disclosure;
FIG. 2 is a diagram of a structure of a shock absorber according to an embodiment of the present disclosure;

FIG. 3 is a flowchart of a vehicle control method according to an embodiment of the present disclosure;
FIG. 4 is a diagram of forces applied to wheels of a vehicle according to an embodiment of the present disclosure;
FIG. 5a is a diagram of an example of a wheel area according to an embodiment of the present disclosure;
FIG. 5b is a diagram of another example of a wheel area according to an embodiment of the present disclosure;
FIG. 6 is a block diagram of a vehicle control apparatus according to an embodiment of the present disclosure;
FIG. 7 is a block diagram of a controller according to an embodiment of the present disclosure; and
FIG. 8 is a block diagram of a suspension system according to an embodiment of the present disclosure.

## DESCRIPTION OF EMBODIMENTS

Various exemplary embodiments of the present disclosure are now described in detail with reference to the accompanying drawings. It should be noted that unless otherwise specified, relative arrangement, numerical expressions, and numerical values of components and steps described in these embodiments do not limit the scope of the present disclosure.

The following descriptions of at least one exemplary embodiment are merely illustrative and do not constitute any limitation on the present disclosure and application or use thereof in any way.

Technologies, methods, and devices known to a person of ordinary skill in related art may not be discussed in detail, but in an appropriate case, the technologies, the methods, and the devices should be considered as a part of this specification.

In all examples shown and discussed herein, any specific value should be construed only as an example but not a limitation. Therefore, other examples of exemplary embodiments may have different values.

It should be noted that similar reference numerals and letters indicate similar items in the following accompany drawings. Therefore, once an item is defined in one accompany drawing, the item does not need to be further discussed in subsequent accompanying drawings.

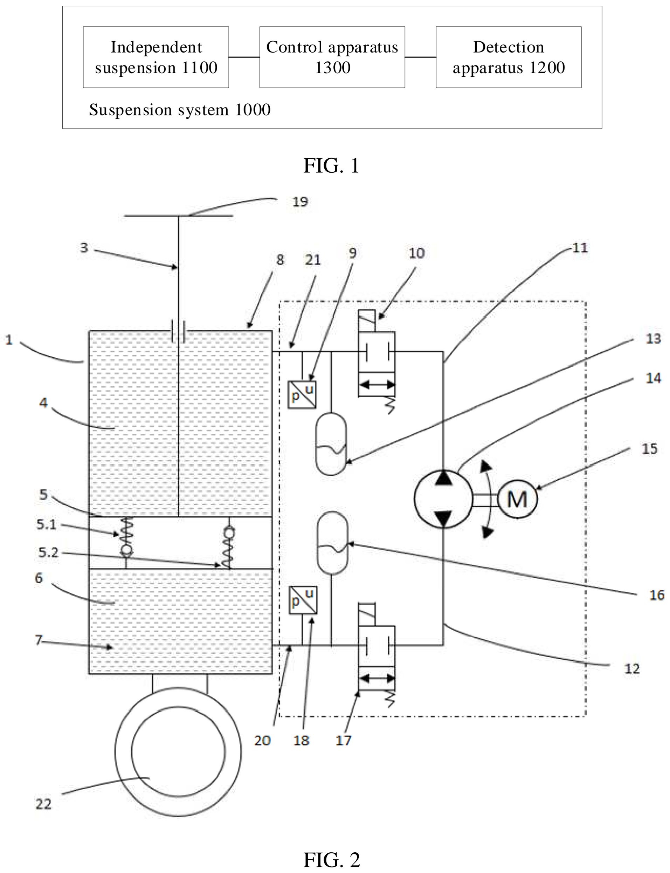

FIG. 1 is a diagram of a composition structure of a suspension system that can be used to implement a vehicle control method according to an embodiment of the present disclosure.

As shown in FIG. 1, a suspension system 1000 may include an independent suspension 1100, a detection apparatus 1200, and a control apparatus 1300.

The detection apparatus 1200 is configured to detect a vehicle status. The control apparatus 1300 is configured to determine a first wheel of a vehicle based on the vehicle status and control an action of at least one shock absorber in the independent suspension 1100 to adjust a position of a center of mass of the vehicle, so that a load of the first wheel is zero. The first wheel is a wheel with zero target load.

Specifically, the control apparatus 1300 may receive the vehicle status output by the detection apparatus 1200 and output a control signal for controlling the action of the shock absorber based on the vehicle status, so as to implement adjustment of the position of the center of mass of the vehicle by using the independent suspension 1100.

The independent suspension 1100 may include a shock absorber 1 connecting a vehicle body of the vehicle and each wheel. A plurality of shock absorbers 1 may be disposed on the vehicle. One shock absorber 1 corresponds to one wheel. The suspension 1100 may further include a spring. The spring and the shock absorber 1 are connected between the vehicle body and the corresponding wheel. During connection, the spring and the shock absorber 1 may separately occupy different mounting space, or the spring may be sleeved on the shock absorber 1 to save mounting space. This is not limited herein.

The shock absorber 1 includes a fixed component and a moving component that can move linearly relative to the fixed component. When the shock absorber 1 is connected to the vehicle body and the wheel, the moving component of the shock absorber 1 may be connected to the vehicle body, and the fixed component of the shock absorber 1 may be connected to the wheel; or the fixed component of the shock absorber 1 may be connected to the vehicle body, and the moving component of the shock absorber 1 may be connected to the wheel.

The vehicle control method in the embodiment of the present disclosure is applicable to any shock absorber that can actively adjust an output under an action of a power member. This is not limited herein. In some embodiments, the shock absorber 1 is directly implemented as the power member. For example, the shock absorber is a linear motor or an electric cylinder, and the moving component of the shock absorber is an output shaft of the motor or the electric cylinder. In some other embodiments, the moving component of the shock absorber 1 may be driven by the power member, for example, a hydraulic shock absorber of an active suspension needs a motor to drive a bidirectional pump, so as to drive the hydraulic shock absorber. A moving component of the hydraulic shock absorber includes a piston rod, and a fixed component of the hydraulic shock absorber includes a cylinder.

The suspension system 1000 may further include a drive control circuit for driving the action of the shock absorber 1. The drive control circuit may be an integrated controller or may be formed by connecting discrete electronic components. This is not limited herein. The control apparatus 1300 may output a control signal to the drive control circuit and control the action of the shock absorber 1 by using the drive control circuit. For example, a power member of a suspension is a motor, and the drive control circuit is a drive control circuit of the motor, such as a motor controller. The control apparatus 1300 is connected to the motor controller to output the control signal to the motor controller, then controls the motor to rotate at an expected speed by using the motor controller, and outputs an expected torque.

FIG. 2 is a diagram of a structure of the shock absorber 1 according to some embodiments. In these embodiments, as shown in FIG. 2, the shock absorber 1 is a hydraulic shock absorber, and the shock absorber 1 includes a piston rod 3, a piston assembly 5, and a cylinder 8. The cylinder 8 is fully filled with a liquid medium 7.

A piston body of the piston assembly 5 is connected to an inner wall of the cylinder 8 in a sliding fit manner, and the piston assembly 5 divides an inner cavity of the cylinder 8 into two independently sealed chambers: an upper chamber 4 and a lower chamber 6. The piston rod 3 is connected to the piston body to move along with the piston body. The piston rod 3 extends outward through the upper chamber 4 of the cylinder 8, and the shock absorber 1 is connected to a vehicle body 19 through the piston rod 3 and is connected to an unsprung part 22 of the vehicle through the cylinder 8. Specifically, the unsprung part 22 may be, for example, a wheel. The cylinder 8 may be, for example, connected to a wheel through fastening on a connecting structure such as a swing arm or a steering knuckle.

In the embodiment of FIG. 2, the shock absorber 1 further includes a bidirectional hydraulic pump 14. The bidirectional hydraulic pump 14 communicates with the lower chamber 6 of the cylinder 8 through a pipeline 20 and communicates with the upper chamber 4 of the cylinder 8 through a pipeline 21. The shock absorber 1 further includes a motor 15 that drives an action of the bidirectional hydraulic pump 14. For example, when the motor 15 rotates in a forward direction, the bidirectional hydraulic pump 14 is driven to rotate in the forward direction. The bidirectional hydraulic pump 14 transports the liquid medium 7 in the upper chamber 4 of the cylinder 8 to the lower chamber 6 of the cylinder 8 through the pipelines 20 and 21, to implement lifting of the shock absorber 1, further raise a height of the suspension, and implement raising of a height between the vehicle body and a corresponding wheel. Correspondingly, when the motor 15 rotates in a reverse direction, the bidirectional hydraulic pump 14 is driven to rotate in the reverse direction. The bidirectional hydraulic pump 14 transports the liquid medium 7 in the lower chamber 6 of the cylinder 8 to the upper chamber 4 of the cylinder 8 through the pipelines 20 and 21, to implement compression of the shock absorber 1, further compress a height of the suspension, and implement reduction of a height between the vehicle body and a corresponding wheel. Vice versa applies, and details are not described herein again.

Pressure sensors 9 and 18 may be disposed at an outlet and an inlet of the cylinder 8 to detect hydraulic pressure of the upper chamber 4 and hydraulic pressure of the lower chamber 6 respectively. Switch valves 10 and 17 respectively control opening/closing of the hydraulic pipelines 20 and 21 to implement pressure maintenance and adjustment of the shock absorber. To compensate for pressure balance during working of the shock absorber 1, energy accumulator apparatuses 13 and 16 are added into the pipelines 20 and 21 respectively. An outlet of the bidirectional hydraulic pump 14 is connected to the hydraulic pipelines 11 and 12 to implement hydraulic transmission.

In the embodiment of FIG. 2, the piston assembly 5 may further include a compression relief valve 5.2 and a rebound relief valve 5.1 that are disposed in the piston body, to control maximum hydraulic pressure in the shock absorber 1 by using the compression relief valve 5.2 and the rebound relief valve 5.1. Herein, the hydraulic pressure is pressure exerted on the piston assembly 5 by the liquid medium 7 (for example, hydraulic oil) in the shock absorber 1. When the hydraulic pressure in the shock absorber 1 exceeds a set maximum hydraulic pressure threshold, the relief valves are open to protect the shock absorber 1 from damage. For example, when the bidirectional hydraulic pump 14 transports the liquid medium 7 from the lower chamber 6 to the upper chamber 4 to implement a compression action, if hydraulic pressure of the upper chamber 4 exceeds an open threshold of the compression relief valve 5.2, the compression relief valve 5.2 is open, to limit continuous increase of the hydraulic pressure of the upper chamber 4. For another example, when the bidirectional hydraulic pump 14 transports the liquid medium 7 from the upper chamber 4 to the lower chamber 6 to implement a lifting action, if the hydraulic pressure of the lower chamber 6 exceeds an open threshold of the rebound relief valve 5.1, the rebound relief valve 5.1 is open, to limit continuous increase of the hydraulic pressure of the lower chamber 6.

A vehicle status detected by the detection apparatus 1200 includes, for example, at least one of a vehicle height, a vehicle body speed, a vehicle body acceleration, tire pressure of wheels, wheel heights, forces applied to wheels, hydraulic pressure of an upper chamber of a shock absorber, hydraulic pressure of a lower chamber of a shock absorber, and the like. The detection apparatus 1200 includes at least one sensor. For example, the detection apparatus 1200 includes an acceleration sensor, a speed sensor, a pressure sensor, a height sensor, and the like. One sensor is used to detect at least one vehicle status of the vehicle. A type of sensor included in the detection apparatus 1200 can be set according to a requirement of the control apparatus 1300 for implementing the control method according to an embodiment of the present disclosure. This is not limited herein.

In one embodiment, the shock absorber 1 may be disposed at each wheel of the vehicle to respectively adjust a vehicle body height corresponding to each wheel.

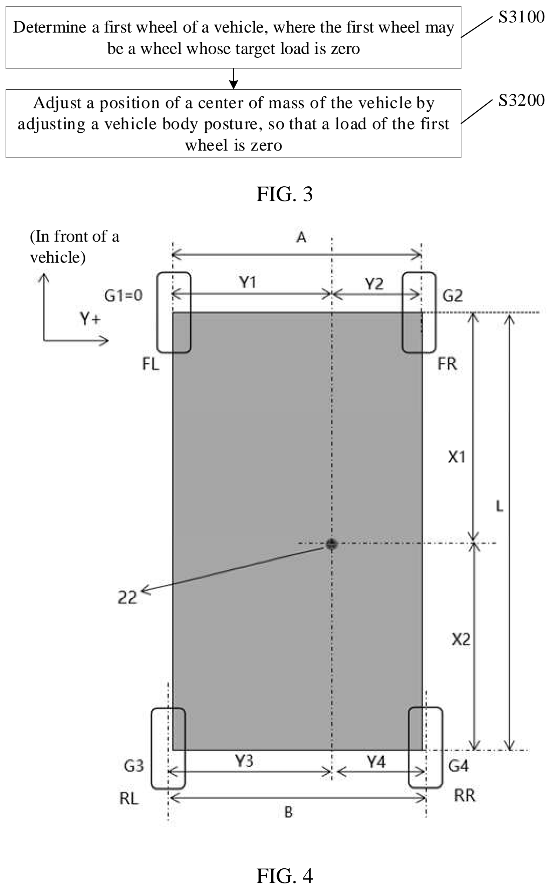

FIG. 3 shows a vehicle control method according to an embodiment.

As shown in FIG. 3, the vehicle control method of this embodiment may include the following steps S3100 and S3200.

Step S3100: Determine a first wheel of a vehicle.

The first wheel may be a wheel with zero target load. That is, a load of the first wheel needs to be adjusted to zero, so that the vehicle travels in a three-wheel state (excluding the first wheel).

The first wheel in this embodiment may be one wheel or one wheel group.

In one example, one wheel group may include a plurality of wheels disposed in parallel at one end of a connection axle.

In another example, one wheel group may include a plurality of wheels disposed on a same connection axle of the vehicle, or a plurality of wheels disposed on a same side of the vehicle.

In one embodiment, a plurality of wheels of the vehicle may be displayed on a central control screen of the vehicle, and in response to an operation of a user of selecting any one of the wheels, the wheel selected by the user is considered as the first wheel.

In another embodiment, a wheel experiencing a tire blowout may be considered as the first wheel.

Based on this embodiment, tire pressure of each tire of the vehicle may be detected, and whether a tire blowout event of the vehicle occurs is detected based on the tire pressure. When the tire blowout event of the vehicle occurs, the wheel experiencing the tire blowout may be used as the first wheel.

Specifically, the vehicle may detect the tire pressure of each tire based on a preset detection frequency. Tire pressure detection frequencies of different tires may be the same or different. This is not limited herein.

In one example, tire pressure of each tire may be detected simultaneously.

Further, that whether a tire blowout event of the vehicle occurs is detected based on the tire pressure may include: determining that the tire blowout event of the vehicle occurs when tire pressure of any wheel is less than or equal to a preset tire pressure threshold; and/or determining that the tire blowout event of the vehicle occurs when a tire pressure change rate of any wheel is greater than or equal to a preset change rate threshold.

The tire pressure threshold and the change rate threshold may be separately set in advance according to application scenarios or specific requirements. For example, the tire pressure threshold may be 160 kPa, and the change rate threshold may be 15%.

A change rate of tire pressure of any wheel may be expressed as: (P2-P1)/P1, where P2 is tire pressure of the wheel detected this time, and P1 is tire pressure of the wheel detected last time. A difference between detection times of P1 and P2 is one detection periodicity of tire pressure.

Based on determining of the first wheel of the vehicle, a wheel located on a same connection axle as the first wheel may be used as a second wheel; a wheel located on a same side of the vehicle as the first wheel may be used as a third wheel; and a wheel disposed diagonal to the first wheel with respect to the vehicle may be used as a fourth wheel.

Further, the first wheel and the second wheel may be disposed on a front axle of the vehicle, and the third wheel and the fourth wheel may be disposed on a rear axle of the vehicle. Alternatively, the first wheel and the second wheel may be disposed on a rear axle of the vehicle, and the third wheel and the fourth wheel may be disposed on a front axle of the vehicle.

Furthermore, the first wheel and the third wheel may be both located on the left side of the vehicle, and the second wheel and the fourth wheel are both located on the right side of the vehicle; or the first wheel and the third wheel are both located on the right side of the vehicle, and the second wheel and the fourth wheel are both located on the left side of the vehicle.

Step S3200: Adjust a position of a center of mass of the vehicle by adjusting a vehicle body posture, so that the load of the first wheel is zero.

In this embodiment, a load of a wheel may be a force applied to the wheel by a vehicle body, and a direction of the force may be perpendicular to a ground and downward.

In an embodiment in which the first wheel includes one wheel or a plurality of wheels arranged in parallel at one end of a connection axle, the load of the first wheel is zero, that is, the first wheel does not bear a weight of the vehicle body, but the weight of the vehicle body is borne by the second wheel, the third wheel, and the fourth wheel of the vehicle, so that the vehicle travels in the three-wheel state.

This embodiment allows the vehicle to maintain vehicle body balance during three-wheel traveling, ensure safe traveling of the vehicle, and protect personal safety of a driver.

When the load of the first wheel is zero, a second moment about the center of mass caused by a load of the second wheel, a third moment about the center of mass caused by a load of the third wheel, and a fourth moment about the center of mass caused by a load of the fourth wheel are balanced.

The load of the second wheel may be determined based on a vehicle body height corresponding to the second wheel, the load of the third wheel may be determined based on a vehicle body height corresponding to the third wheel, and the load of the fourth wheel may be determined based on a vehicle body height corresponding to the fourth wheel.

In one embodiment of the present disclosure, first mapping data reflecting a mapping relationship between a vehicle body height and a load may be established to obtain a load of any wheel based on a vehicle body height corresponding to the corresponding wheel and the first mapping data.

In this embodiment, the first mapping data may be a first mapping function, a first comparison table, or the like. This is not limited herein.

For the first mapping function, a dependent variable of the first mapping function is the load, and an independent variable is the vehicle body height corresponding to the wheel. In this way, a vehicle body height corresponding to any wheel is substituted into the first mapping function, so that the load corresponding to the vehicle body height can be obtained.

For the first comparison table, the first comparison table may be searched for the load corresponding to the vehicle body height corresponding to the wheel. If the vehicle body height corresponding to the wheel cannot be directly found in the first comparison table, two values adjacent to the vehicle body height corresponding to the wheel may be found, and based on these two values and loads respectively corresponding to these two values, the load corresponding to the vehicle body height is obtained as the load of the wheel by using an interpolation means.

In one embodiment of the present disclosure, the second moment, the third moment, and the fourth moment may be balanced when the following formula is satisfied:

$$\begin{cases} M2_x = M3_x + M4_x \\ M3_y = M2_y + M4_y \end{cases}$$

$M2_x$ is a component of the second moment in a length direction of the vehicle, $M3_x$ is a component of the third moment in the length direction of the vehicle, $M4_x$ is a component of the fourth moment in the length direction of the vehicle, $M2_y$ is a component of the second moment in a width direction of the vehicle, $M3_y$ is a component of the third moment in the width direction of the vehicle, and $M4_y$ is a component of the fourth moment in the width direction of the vehicle.

In this embodiment, the length direction and the width direction of the vehicle are relative to the entire vehicle and are all parallel to the ground. During adjustment of the center of mass of the vehicle, the length direction and the width direction of the vehicle do not change with a change of the vehicle body posture.

In an example shown in FIG. 4, a left front wheel FL of the vehicle is the first wheel, a right front wheel FR is the second wheel, a left rear wheel RL is the third wheel, a right rear wheel RR is the fourth wheel, and 22 represents the center of mass of the vehicle. The load of the first wheel is G1, the load of the second wheel is G2, the load of the third wheel is G3, and the load of the fourth wheel is G4. X represents the length direction of the vehicle, and Y represents the width direction of the vehicle. A distance between a center of the first wheel and the center of mass in the length direction and a distance between the second wheel and the center of mass in the length direction are both X1, a distance between a center of the third wheel and the center of mass in the length direction and a distance between the fourth wheel and the center of mass in the width direction are X2, a distance between the center of the first wheel and the center of mass in the width direction is Y1, a distance between a center of the second wheel and the center of mass in the width direction is Y2, a distance between the center of the third wheel and the center of mass in the width direction is Y3, and a distance between a center of the fourth wheel and the center of mass in the width direction is Y4. A front wheel track of the vehicle may be expressed as A=Y1+Y2, a rear wheel track of the vehicle may be expressed as B=Y3+Y4, and a wheel base of the vehicle may be expressed as L=X1+X2.

Then, the component of the second moment in the length direction of the vehicle may be expressed as $M2_x = G2 * X1$, the component of the third moment in the length direction of the vehicle may be expressed as $M3_x = G3 * X2$, the component of the fourth moment in the length direction of the vehicle may be expressed as $M4_x = G4 * X2$, the component of the second moment in the width direction of the vehicle can be expressed as $M2_y = G2 * Y2$, the component of the third moment in the width direction of the vehicle may be expressed as $M3_y = G3 * Y3$, and the component of the fourth moment in the width direction of the vehicle may be expressed as

$$M4_y = G4 * Y4.$$

In an embodiment in which the first wheel includes a plurality of wheels disposed on one connection axle of the vehicle, the load of the first wheel is zero, and the weight of the vehicle body may be borne by wheels on another connection axle of the vehicle, so that the vehicle travels in a two-wheel state.

In this embodiment, moments about the center of mass caused by loads of the wheels on the another connection axle of the vehicle are balanced.

Specifically, in the width direction of the vehicle, components of the moments about the center of mass caused by the loads of the wheels on the another connection axle are equal, and in the length direction of the vehicle, components of the moments about the center of mass caused by the loads of the wheels on the another connection axle are all zero.

This embodiment allows the vehicle to maintain vehicle body balance during two-wheel traveling, ensure safe traveling of the vehicle, and protect personal safety of a driver.

In an embodiment in which the first wheel includes a plurality of wheels disposed on the same side of the vehicle, the load of the first wheel is zero, and the weight of the vehicle body may be borne by wheels on the other side of the vehicle, so that the vehicle travels in the two-wheel state.

Specifically, in the length direction of the vehicle, components of moments about the center of mass caused by loads of the wheels on the other side are equal, and in the width direction of the vehicle, components of the moments about the center of mass caused by the loads of the wheels on the other side are all zero.

This embodiment allows the vehicle to maintain vehicle body balance during two-wheel traveling, ensure safe traveling of the vehicle, and protect personal safety of a driver.

In one embodiment of the present disclosure, the adjusting the position of the center of mass by adjusting the vehicle body posture may include: adjusting the position of the center of mass in a target area, where the target area is an area other than an area of the first wheel.

In one embodiment, an area corresponding to each wheel may be determined in advance according to application scenarios or specific requirements. Then, the area of the first wheel is a wheel area corresponding to the first wheel.

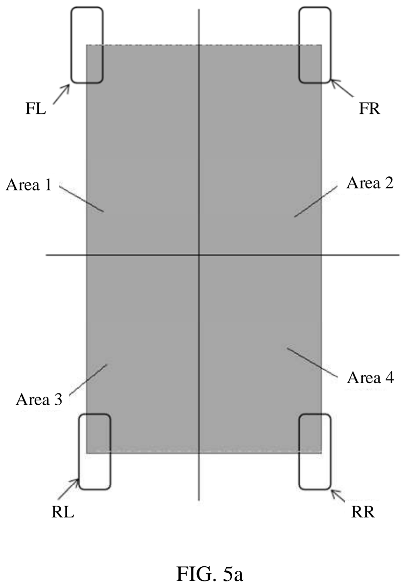

In one example, as shown in FIG. 5a, a symmetry line in the length direction of the vehicle and a symmetry line in the width direction may be determined. The two symmetry lines divide the vehicle into four areas. The area where each wheel is located may be considered as a corresponding wheel area.

In another embodiment, the wheel area corresponding to each wheel may be divided based on the position of the center of mass before adjusting the vehicle body posture of the vehicle, that is, the position of the center of mass before executing step S3200.

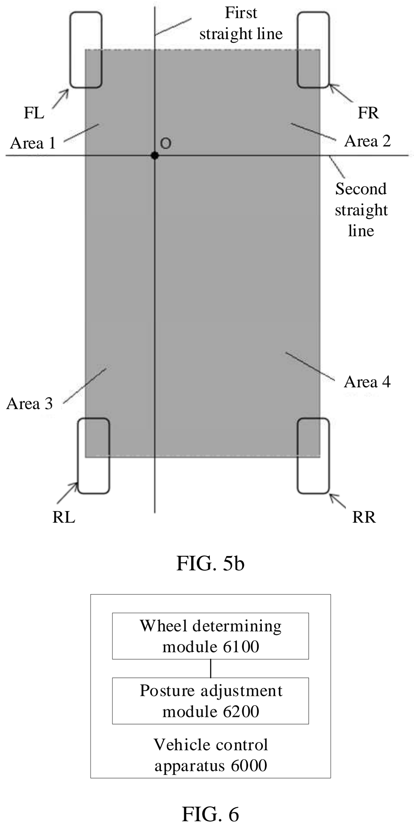

Specifically, as shown in FIG. 5b, a first straight line that passes through the center of mass and is parallel to the length direction of the vehicle and a second straight line that passes through the center of mass and is parallel to the width direction of the vehicle may be determined. The first straight line and the second straight line may divide the vehicle into four areas. The area where each wheel is located may be considered as the corresponding wheel area.

In an example shown in FIG. 5b, O is the position of the center of mass of the vehicle. In a process of executing step S3200 to adjust the position of the center of mass of the vehicle, the wheel area corresponding to each wheel may change with the position of the center of mass, or may remain unchanged. This is not limited herein.

Specifically, as shown in FIG. 5a and FIG. 5b, a wheel area corresponding to the left front wheel FL is an area 1, a wheel area corresponding to the right front wheel FR is an area 2, a wheel area corresponding to the left rear wheel RL is an area 3, and a wheel area corresponding to the right rear wheel RR is an area 4.

Based on this, when the first wheel is the left front wheel FL, the first wheel area is the area 1, and the target area may include the area 2, the area 3, and the area 4. When the first wheel is the right front wheel FR, the first wheel area is the area 2, and the target area may include the area 1, the area 3, and the area 4. When the first wheel is the left rear wheel RL, the first wheel area is the area 3, and the target area may include the area 1, the area 2, and the area 4. When the first wheel is the right rear wheel RR, the first wheel area is the area 4, and the target area may include the area 1, the area 2, and the area 3.

In still another embodiment of the present disclosure, a size of the area of the first wheel may be determined based on at least one of the vehicle body posture and a vehicle motion status. The area of the first wheel may be rectangular, and the size of the area of the first wheel may be represented by at least one side length of the area of the first wheel.

In an embodiment in which the size of the area of the first wheel is determined based on the vehicle body posture, the size of the area of the first wheel may be determined based on the vehicle body height corresponding to the first wheel.

Specifically, third mapping data reflecting a mapping relationship between the vehicle body height and the size of the area of the first wheel may be pre-established to obtain the size of the area of the first wheel based on the vehicle body height corresponding to the first wheel and the third mapping data.

In this embodiment, the third mapping data may be a third mapping function, a third comparison table, or the like. This is not limited herein.

For the third mapping function, a dependent variable of the third mapping function is the size of the area of the first wheel, and an independent variable is the vehicle body height corresponding to the first wheel. In this way, the vehicle body height corresponding to the first wheel is substituted into the third mapping function, so that the size of the area of the first wheel corresponding to the vehicle body height can be obtained.

For the third comparison table, the third comparison table may be searched for the size that is of the area of the first wheel and that corresponds to the vehicle body height corresponding to the wheel. If the vehicle body height corresponding to the wheel cannot be directly found in the third comparison table, two values adjacent to the vehicle body height corresponding to the wheel may be found, and based on these two values and sizes that are of the area of the first wheel and that respectively correspond to these two values, the size that is of the area of the first wheel and that corresponds to the vehicle body height is obtained as the size of the area of the first wheel by using an interpolation means.

In an embodiment in which the size of the area of the first wheel is determined based on the vehicle body posture, the size of the area of the first wheel may alternatively be determined based on a tilt angle of the vehicle body relative to the ground.

Specifically, fourth mapping data reflecting a mapping relationship between the tilt angle and the size of the area of the first wheel may be pre-established to obtain the size of the area of the first wheel based on the tilt angle and the fourth mapping data.

In this embodiment, the fourth mapping data may be a fourth mapping function, a fourth comparison table, or the like. This is not limited herein.

For the fourth mapping function, a dependent variable of the fourth mapping function is the size of the area of the first wheel, and an independent variable is the tilt angle. In this way, the tilt angle is substituted into the fourth mapping function, so that the size that is of the area of the first wheel and that corresponds to the tilt angle can be obtained.

For the fourth comparison table, the fourth comparison table may be searched for the size that is of the area of the first wheel and that corresponds to the tilt angle. If the tilt angle cannot be directly found in the fourth comparison table, two values adjacent to the tilt angle may be found, and based on these two values and sizes that are of the area of the first wheel and that respectively correspond to these two values, the size that is of the area of the first wheel and that corresponds to the tilt angle is obtained as the size of the area of the first wheel by using an interpolation means.

In an embodiment in which the size of the area of the first wheel is determined based on the vehicle motion status, the size of the area of the first wheel may be determined based on a steering angle of the vehicle.

Specifically, fifth mapping data reflecting a mapping relationship between the steering angle and the size of the area of the first wheel may be pre-established to obtain the size of the area of the first wheel based on the steering angle and the fifth mapping data.

In this embodiment, the fifth mapping data may be a fifth mapping function, a fifth comparison table, or the like. This is not limited herein.

For the fifth mapping function, a dependent variable of the fifth mapping function is the size of the area of the first wheel, and an independent variable is the steering angle. In this way, the steering angle is substituted into the fifth mapping function, so that the size that is of the area of the first wheel and that corresponds to the steering angle can be obtained.

For the fifth comparison table, the fifth comparison table may be searched for the size that is of the area of the first wheel and that corresponds to the steering angle. If the steering angle cannot be directly found in the fifth comparison table, two values adjacent to the steering angle may be found, and based on these two values and sizes that are of the area of the first wheel and that respectively correspond to these two values, the size that is of the area of the first wheel and that corresponds to the steering angle is obtained as the size of the area of the first wheel by using an interpolation means.

In an embodiment in which the size of the area of the first wheel is determined based on the vehicle motion status, the size of the area of the first wheel may alternatively be determined based on a traveling speed of the vehicle.

Specifically, sixth mapping data reflecting a mapping relationship between the traveling speed and the size of the area of the first wheel may be pre-established to obtain the size of the area of the first wheel based on the traveling speed and the sixth mapping data.

In this embodiment, the sixth mapping data may be a sixth mapping function, a sixth comparison table, or the like. This is not limited herein.

For the sixth mapping function, a dependent variable of the sixth mapping function is the size of the area of the first wheel, and an independent variable is the traveling speed. In this way, the traveling speed is substituted into the sixth mapping function, so that the size that is of the area of the first wheel and that corresponds to the traveling angle can be obtained.

For the sixth comparison table, the sixth comparison table may be searched for the size that is of the area of the first wheel and that corresponds to the traveling speed. If the traveling speed cannot be directly found in the sixth comparison table, two values adjacent to the traveling speed may be found, and based on these two values and sizes that are of the area of the first wheel and that respectively correspond to these two values, the size that is of the area of the first wheel and that corresponds to the traveling speed is obtained as the size of the area of the first wheel by using an interpolation means.

According to this embodiment, the position of the center of mass is adjusted in the target area, so that the load of the first wheel can be prevented from increasing, and the center of mass can be quickly adjusted to a position where the load of the first wheel is zero, to enable the vehicle body to quickly reach a stable state.

In one embodiment of the present disclosure, the target area is defined, so that in the length direction of the vehicle, a distance between the first wheel and the center of mass is greater than a distance between the third wheel and the center of mass; or the target area is defined, so that in the width direction of the vehicle, a distance between the first wheel and the center of mass is greater than a distance between the second wheel and the center of mass.

When the target area is defined, so that in the length direction of the vehicle, the distance between the first wheel and the center of mass is greater than the distance between the third wheel and the center of mass, the position of the center of mass is adjusted in the target area, that is, the center of mass moves toward a position of the third wheel to reduce the load of the first wheel.

In examples shown in FIG. 5a and FIG. 5b, when the first wheel is the left front wheel FL, the area of the first wheel is the area 1, so that in the length direction of the vehicle, the target area where the distance between the first wheel and the center of mass is greater than the distance between the third wheel and the center of mass can include the area 3 and the area 4. When the first wheel is the right front wheel FR, the area of the first wheel is the area 2, so that in the length direction of the vehicle, the target area where the distance between the first wheel and the center of mass is greater than the distance between the third wheel and the center of mass can include the area 3 and the area 4. When the first wheel is the left rear wheel RL, the area of the first wheel is the area 3, so that in the length direction of the vehicle, the target area where the distance between the first wheel and the center of mass is greater than the distance between the third wheel and the center of mass can include the area 1 and the area 2. When the first wheel is the right rear wheel RR, the area of the first wheel is the area 4, so that in the length direction of the vehicle, the target area where the distance between the first wheel and the center of mass is greater than the distance between the third wheel and the center of mass can include the area 1 and the area 2.

When the target area is defined, so that in the length direction of the vehicle, the distance between the first wheel and the center of mass is greater than the distance between the second wheel and the center of mass, the position of the center of mass is adjusted in the target area, that is, the center of mass moves toward a position of the second wheel to reduce the load of the first wheel.

In examples shown in FIG. 5a and FIG. 5b, when the first wheel is the left front wheel FL, the area of the first wheel is the area 1, so that in the width direction of the vehicle, the target area where the distance between the first wheel and the center of mass is greater than the distance between the second wheel and the center of mass can include the area 2 and the area 4. When the first wheel is the right front wheel FR, the area of the first wheel is the area 2, so that in the width direction of the vehicle, the target area where the distance between the first wheel and the center of mass is greater than the distance between the second wheel and the center of mass can include the area 1 and the area 3. When the first wheel is the left rear wheel RL, the area of the first wheel is the area 3, so that in the width direction of the vehicle, the target area where the distance between the first wheel and the center of mass is greater than the distance between the second wheel and the center of mass can include the area 2 and the area 4. When the first wheel is the right rear wheel RR, the area of the first wheel is the area 4, so that in the width direction of the vehicle, the target area where the distance between the first wheel and the center of mass is greater than the distance between the second wheel and the center of mass can include the area 1 and the area 3.

According to this embodiment, the target area may be defined, so that in the length direction of the vehicle, the distance between the first wheel and the center of mass is greater than the distance between the third wheel and the center of mass, and in the width direction of the vehicle, the distance between the first wheel and the center of mass is greater than the distance between the second wheel and the center of mass.

Therefore, when the position of the center of mass is adjusted, the position of the center of mass can be adjusted both in the length direction of the vehicle and in the width direction of the vehicle, so that the vehicle can implement effect of adjusting the center of mass to make the load of the first wheel zero under a plurality of working conditions. The working conditions of the vehicle may represent the vehicle body posture and a traveling condition of the vehicle before adjusting the center of mass.

In one embodiment of the present disclosure, the adjusting the position of the center of mass by adjusting the vehicle body posture may include: adjusting the vehicle body posture by adjusting a vehicle body height corresponding to another wheel. The another wheel is any wheel in the vehicle except the first wheel.

Specifically, adjusting the vehicle body height corresponding to any wheel may be implement by adjusting a height of a suspension corresponding to the wheel. The suspension may connect the corresponding wheel and the vehicle body, and the height of the suspension is a distance between a first position that is on the wheel and that is connected to the suspension a second position that is on the vehicle body and that is connected to the suspension.

Further, the center of mass is adjusted to move in a direction away from the first wheel, so that the load of the first wheel can be reduced. Therefore, the center of mass is adjusted to move in the direction away from the first wheel, so that the center of mass can be adjusted to the position where the load of the first wheel is zero.

Furthermore, the adjusting the vehicle body posture by adjusting the vehicle body height corresponding to another wheel, so that the load of the first wheel is zero may include at least one of the following: raising the vehicle body height corresponding to the second wheel and the vehicle body height corresponding to the third wheel, where the vehicle body height corresponding to the second wheel is higher than the vehicle body height corresponding to the third wheel; lowering the vehicle body height corresponding to the second wheel; lowering the vehicle body height corresponding to the fourth wheel; and lowering the vehicle body height corresponding to the third wheel.

An embodiment is provided in which the adjusting the vehicle body posture by adjusting the vehicle body height corresponding to another wheel includes raising the vehicle body height corresponding to the second wheel and the vehicle body height corresponding to the third wheel, where the vehicle body height corresponding to the second wheel is higher than the vehicle body height corresponding to the third wheel. In this embodiment, the vehicle body height corresponding to the second wheel is higher than the vehicle body height corresponding to the third wheel. This allows the center of mass of the vehicle to move toward a wheel area corresponding to the third wheel and a wheel area corresponding to the fourth wheel to reduce the load of the first wheel. Moreover, because the vehicle body height corresponding to the second wheel and the vehicle body height corresponding to the third wheel are both raised, the load of the first wheel can be further reduced. Therefore, the center of mass can be adjusted to the position where the load of the first wheel is zero.

An embodiment is provided in which the adjusting the vehicle body posture by adjusting the vehicle body height corresponding to another wheel includes lowering the vehicle body height corresponding to the second wheel. In this embodiment, the vehicle body height corresponding to the second wheel is lowered. This allows the center of mass of the vehicle to move toward the wheel area corresponding to the second wheel to reduce the load of the first wheel. Further, the center of mass can be adjusted to the position where the load of the first wheel is zero.

An embodiment is provided in which the adjusting the vehicle body posture by adjusting the vehicle body height corresponding to another wheel includes lowering the vehicle body height corresponding to the third wheel. In this embodiment, the vehicle body height corresponding to the third wheel is lowered. This allows the center of mass of the vehicle to move toward the wheel area corresponding to the third wheel to reduce the load of the first wheel. Further, the center of mass can be adjusted to the position where the load of the first wheel is zero.

An embodiment is provided in which the adjusting the vehicle body posture by adjusting the vehicle body height corresponding to another wheel includes lowering the vehicle body height corresponding to the fourth wheel. In this embodiment, the vehicle body height corresponding to the fourth wheel is lowered. This allows the center of mass of the vehicle to move toward the wheel area corresponding to the fourth wheel to reduce the load of the first wheel. Further, the center of mass can be adjusted to the position where the load of the first wheel is zero.

For any wheel, raising a vehicle body height corresponding to the wheel may be stretching a shock absorber 1 corresponding to the wheel, to raise a height of a suspension. Specifically, the control apparatus 1300 may control the switch valves 10 and 17 to be open, so that the pipelines communicate with each other. The motor 15 drives the bidirectional hydraulic pump 14 to rotate forward to work. The liquid medium 7 enters the lower chamber 6 through the pipelines 12 and 20, and rapid pressure build-up occurs inside the cylinder 8. Hydraulic pressure of the upper chamber 4 and the lower chamber 6 are detected respectively by using pressure sensors 9 and 18, and the detected hydraulic pressure is transmitted to the control apparatus 1300, so that the control apparatus 1300 calculates an actual force provided by the shock absorber 1 to the vehicle body based on the hydraulic pressure of the upper chamber 4 and the lower chamber 6. A pressure difference between the upper chamber and the lower chamber in the cylinder 8 generates hydraulic pressure to push the piston assembly 5 and the piston rod 3 to move upward relative to the cylinder 8. The liquid medium in the upper chamber 4 on the other side flows out and returns to the bidirectional hydraulic pump 14 through the pipelines 21 and 11 to implement hydraulic circulation. At the same time, the piston rod 3 drives the vehicle body side 19 to move upward under the same force. When a height sensor detects that a corresponding vehicle body height reaches a corresponding target height, the control apparatus 1300 controls the switch valves 10 and 17 to be closed, and the motor 15 stops working and enters a standby mode. When the height sensor detects that the corresponding vehicle body height changes significantly, or the hydraulic pressure detected by the pressure sensors 9 and 18 decreases, the control apparatus 1300 controls, based on calculation of an ECU model, the switch valves 10 and 17 to be reconnected, and the motor 15 restarts, so that the shock absorber 1 applies a force to the vehicle body to maintain stability of the vehicle body. In a process of providing an upward force to the vehicle body, the energy accumulator 16 may be configured to store hydraulic pressure to stabilize a pressure change of the shock absorber and help rapid pressure build-up of the shock absorber. The energy accumulator 13 may be configured to compensate for a pressure difference caused by upward movement of the piston rod 3 of the shock absorber to balance pressure of the shock absorber.

For any wheel, lowering a vehicle body height corresponding to the wheel may be compressing a shock absorber 1 corresponding to the wheel, to lower a height of a suspension. Specifically, the control apparatus 1300 may control the switch valves 10 and 17 to be open, so that the pipelines communicate with each other. The motor 15 drives the bidirectional hydraulic pump 14 to rotate reversely to work. The liquid medium 7 enters the upper chamber 4 through the pipelines 11 and 21, and rapid pressure build-up occurs inside the cylinder 8. The hydraulic pressure of the upper chamber 4 and the lower chamber 6 are detected respectively by using the pressure sensors 9 and 18, and the detected hydraulic pressure is transmitted to the control apparatus 1300, so that the control apparatus 1300 calculates the actual force provided by the shock absorber 1 to the vehicle body based on the hydraulic pressure of the upper chamber 4 and the lower chamber 6. The pressure difference between the upper chamber and the lower chamber in the cylinder 8 generates the hydraulic pressure to push the piston assembly 5 and the piston rod 3 to move downward relative to the cylinder 8. The liquid medium in the lower chamber 6 on the other side flows out and returns to the bidirectional hydraulic pump 14 through the pipelines 20 and 12 to implement hydraulic circulation. At the same time, the piston rod 3 drives the vehicle body side 19 to move downward under the same force. When the height sensor detects that the corresponding vehicle body height reaches the corresponding target height, the control apparatus 1300 controls the switch valves 10 and 17 to be closed, and the motor 15 stops working and enters the standby mode. When the height sensor detects that the corresponding vehicle body height changes significantly, or the hydraulic pressure detected by the pressure sensors 9 and 18 decreases, the control apparatus 1300 controls, based on calculation of the ECU model, the switch valves 10 and 17 to be reconnected, and the motor 15 restarts, so that the shock absorber 1 applies the force to the vehicle body to maintain stability of the vehicle body. In a process of providing a downward force to the vehicle body, the energy accumulator 13 may be configured to store the hydraulic pressure to stabilize the pressure change of the shock absorber and help rapid pressure build-up of the shock absorber. The energy accumulator 16 may be configured to compensate for a pressure difference caused by downward movement of the piston rod 3 of the shock absorber 1 to balance the pressure of the shock absorber.

In this embodiment, during three-wheel traveling of the vehicle, the switch valves 10 and 17 are closed, and the motor and the bidirectional hydraulic pump enter the standby mode. This can reduce a working time of the bidirectional hydraulic pump, avoid overheating of the bidirectional hydraulic pump due to long-term working, and reduce power consumption of the bidirectional hydraulic pump.

According to this embodiment, a corresponding vehicle body height may be adjusted by adjusting a height of a suspension corresponding to another wheel, to implement adjustment of the vehicle body posture.

In the embodiment in which the first wheel includes the plurality of wheels disposed on one connection axle of the vehicle, heights of suspensions corresponding to the wheels on the another connection axle of the vehicle may be adjusted to implement adjustment of the vehicle body posture.

Specifically, the heights of the suspensions corresponding to the wheels on the another connection axle may be lowered, that is, vehicle body heights corresponding to the wheels on the another connection axle may be lowered, so that the center of mass moves toward the another connection axle, to implement effect of adjusting the center of mass to make the load of the first wheel zero.

In an embodiment in which the first wheel includes the plurality of wheels disposed on the same side of the vehicle, the load of the first wheel is zero, and the weight of the vehicle body may be borne by the wheels on the other side of the vehicle, so that the vehicle travels in the two-wheel state.

Specifically, heights of suspensions corresponding to the wheels on the other side may be lowered, that is, vehicle body heights corresponding to the wheels on the other side may be lowered, so that the center of mass moves toward the other side of the vehicle, to implement effect of adjusting the center of mass to make the load of the first wheel zero.

In one embodiment of the present disclosure, the adjusting the position of the center of mass by adjusting the vehicle body posture, so that the load of the first wheel is zero may include: adjusting the center of mass to be within the target area; and adjusting the position of the center of mass in the target area, so that the load of the first wheel is zero.

In this embodiment, the center of mass is first adjusted to be within the target area, and then the position of the center of mass is adjusted in the target area, so that the center of mass can be quickly adjusted to the position where the load of the first wheel is zero, to enable the vehicle body to quickly reach a stable state.

In one embodiment of the present disclosure, the adjusting the center of mass to be within the target area may include: adjusting the vehicle body height corresponding to the second wheel to a first target height, and adjusting the vehicle body height corresponding to the third wheel to a second target height, where the first target height is greater than the second target height.

In this embodiment, the first target height and the second target height may be set in advance according to application scenarios or specific requirements, or may be obtained through calculation based on a vehicle body height corresponding to at least one wheel before the center of mass is adjusted.

Further, the vehicle body height corresponding to the second wheel may be raised to the first target height, and the vehicle body height corresponding to the third wheel can be raised to the second target height, so that the vehicle body height corresponding to the second wheel is greater than the vehicle body height corresponding to the third wheel. In this way, the center of mass can be adjusted to be within the target area.

A manner of raising the vehicle body height corresponding to the second wheel and the vehicle body height corresponding to the third wheel may be stretching shock absorbers corresponding to the second wheel and the third wheel to raise heights of suspensions corresponding to the second wheel and the third wheel. For details, refer to a control manner of the shock absorber in the foregoing embodiment. Details are not described herein again.

In one embodiment of the present disclosure, the adjusting the position of the center of mass in the target area, so that the load of the first wheel is zero may include: lowering the vehicle body height corresponding to the fourth wheel, so that the load of the first wheel is zero. A manner of lowering the vehicle body height corresponding to the fourth wheel may be compressing a shock absorber corresponding to the fourth wheel to lower a height of a suspension corresponding to the fourth wheel. For details, refer to a manner for compressing the shock absorber in the foregoing embodiment. Details are not described herein again.

When the vehicle body height corresponding to the second wheel and the vehicle body height corresponding to the third wheel remain unchanged, the vehicle body height corresponding to the fourth wheel is lowered, so that the center of mass moves in a direction close to the fourth wheel. This can ensure that the center of mass is always located in the target area during an adjustment process, and also can quickly adjust the center of mass to the position where the load of the first wheel is zero.

In one embodiment of the present disclosure, the method may further include: adjusting the tilt angle of the vehicle body relative to the ground, so that an absolute value of the tilt angle is less than or equal to an angle threshold.

The angle threshold may be set in advance according to application scenarios or specific requirements. For example, the angle threshold may be 5 degrees.

Specifically, the tilt angle of the vehicle body relative to the ground may be adjusted by adjusting the vehicle body height corresponding to any wheel of the vehicle.

Further, the adjusting the tilt angle of the vehicle body relative to the ground, so that the absolute value of the tilt angle is less than or equal to the angle threshold may include: detecting the tilt angle of the vehicle body relative to the ground; and when the absolute value of the tilt angle is greater than the angle threshold, adjusting the vehicle body height corresponding to the fourth wheel until the absolute value of the tilt angle is less than or equal to the angle threshold.

When the load of the first wheel is zero, if the tilt angle is greater than the angle threshold, it indicates that the vehicle body height corresponding to the first wheel is too high, and the vehicle body height corresponding to the fourth wheel is too low. To lower the vehicle body height corresponding to the first wheel, the vehicle body height corresponding to the fourth wheel may be raised, so that the absolute value of the tilt angle of the vehicle body relative to the ground is less than or equal to the angle threshold.

A manner of raising the vehicle body height corresponding to the fourth wheel may be stretching the shock absorber corresponding to the fourth wheel to raise the height of the suspension corresponding to the fourth wheel. For details, refer to a manner for stretching the shock absorber in the foregoing embodiment. Details are not described herein again.

When the load of the first wheel is not zero, if the tilt angle is greater than the angle threshold, it indicates that the vehicle body height corresponding to the first wheel is too low, and the vehicle body height corresponding to the fourth wheel is too high. To make the load of the first wheel zero and reduce the absolute value of the tilt angle, the vehicle body height corresponding to the fourth wheel may be lowered until the absolute value of the tilt angle of the vehicle body relative to the ground is less than or equal to the angle threshold.

According to this embodiment, when the absolute value of the tilt angle of the vehicle body relative to the ground is greater than the angle threshold, the vehicle body height corresponding to the fourth wheel is adjusted, so that the vehicle body posture can be quickly adjusted to the stable state.

Based on this, the adjusting the position of the center of mass by adjusting the vehicle body posture, so that the load of the first wheel is zero may include: adjusting the position of the center of mass and the tilt angle until the absolute value of the tilt angle is less than or equal to the angle threshold and the load of the first wheel is zero.

In this embodiment, the position of the center of mass and the tilt angle of the vehicle body relative to the ground are adjusted until the absolute value of the tilt angle of the vehicle body relative to the ground is less than or equal to the angle threshold and the load of the first wheel is zero. This enables the vehicle to maintain vehicle body balance when traveling in the three-wheel state and improves stability and safety of three-wheel traveling of the vehicle.

In one embodiment of the present disclosure, the method may further include: controlling the first wheel to be lifted when the load of the first wheel is zero, so that the first wheel leaves the ground.

In this embodiment, controlling the first wheel to be lifted when the load of the first wheel is zero may include reducing a height between the first wheel and the vehicle body when the vehicle body height corresponding to the first wheel is unchanged, that is, compressing the shock absorber corresponding to the first wheel to reduce the height of the corresponding suspension.

When a first tire is a tire that is blown out, the tire that is blown out is controlled to leave the ground, so that the tire that is blown out can be prevented from being impacted by potholes on a road surface, to improve safety of the vehicle.

In one embodiment of the present disclosure, the method may further include the following steps S3110 to S3130.

Step S3110: Detect a current traveling speed of the vehicle by using a speed sensor of the vehicle.

In step S3120, when the current traveling speed is greater than a preset speed threshold, determining a third braking force of the third wheel based on the current traveling speed; and determining a second braking force of the second wheel and a fourth braking force of the fourth wheel based on the third braking force, so that the second braking force, the third braking force, and the fourth braking force satisfy the following braking torque balance formula:

$$F2 * y2 + F4 * y4 = F3 * y3$$

F2 represents the second braking force, F3 represents the third braking force, F4 represents the fourth braking force, y2 represents the distance between the center of the second wheel and the center of mass in the width direction of the vehicle, y3 represents the distance between the center of the third wheel and the center of mass in the width direction of the vehicle, and y4 represents the distance between the center of the fourth wheel and the center of mass in the width direction of the vehicle.

In one embodiment, the determining a third braking force of the third wheel based on the current traveling speed includes: searching, based on the current traveling speed, a second comparison table of a mapping relationship between a braking force and a traveling speed to obtain a braking force corresponding to the current traveling speed as the third braking force.

Further, the second comparison table may be searched for the third braking force corresponding to the current traveling speed. If the current traveling speed cannot be directly found in the second comparison table, two values adjacent to the current traveling speed may be found, and based on these two values and braking forces respectively corresponding to these two values, the braking force corresponding to the current traveling speed is obtained as the third braking force by using an interpolation means.

Furthermore, the second comparison table may also represent a mapping relationship between a plurality of speed ranges and braking forces. Then, the second comparison table may be searched to determine a braking force corresponding to a speed range to which the current traveling speed belongs as the third braking force.

In this embodiment, the second braking force and the fourth braking force determined based on the third braking force may not be the only solution, provided that the third braking force, the obtained second braking force, and the obtained fourth braking force satisfy the above braking torque balance formula.

Step S3130: Control vehicle braking based on the second braking force, the third braking force, and the fourth braking force.

Specifically, a braking apparatus corresponding to a second tire may be controlled to apply the second braking force to the second tire; a braking apparatus corresponding to a third tire may be controlled to apply the third braking force to the third tire; and a braking apparatus corresponding to a fourth tire may be controlled to apply the fourth braking force to the fourth tire.

Because the position of the center of mass of the vehicle is adjusted, if a same braking force is applied to the second tire, the third tire, and the fourth tire, the vehicle body may tilt during braking.

Therefore, in this embodiment, during braking of the vehicle, the second braking force is applied to the second tire, the third braking force is applied to the third tire, and the fourth braking force is applied to the fourth tire to satisfy braking torque balance. This can ensure stability of the vehicle body during braking of the vehicle.

FIG. 6 is a block diagram of a vehicle control apparatus according to an embodiment of the present disclosure. As shown in FIG. 6, the vehicle control apparatus 6000 may include a wheel determining module 6100 and a posture adjustment module 6200. The wheel determining module 6100 is configured to determine a first wheel of a vehicle, where the first wheel is a wheel with zero target load. The posture adjustment module 6200 is configured to adjust a position of a center of mass of the vehicle by adjusting a vehicle body posture of the vehicle, so that the load of the first wheel is zero.

In one embodiment of the present disclosure, the posture adjustment module 6200 may also be configured to:
adjust the position of the center of mass in a target area, where the target area is an area other than an area of the first wheel.

In one embodiment of the present disclosure, the target area is defined, so that in a length direction of the vehicle, a distance between the first wheel and the center of mass is greater than a distance between a third wheel and the center of mass, where the third wheel and the first wheel are located on a same side of the vehicle.

Alternatively, the target area is defined, so that in a width direction of the vehicle, a distance between the first wheel and the center of mass is greater than a distance between a second wheel and the center of mass, where the second wheel and the first wheel are located on a same connection axle of the vehicle.

In one embodiment of the present disclosure, the posture adjustment module 6200 may also be configured to:
adjust the vehicle body posture by adjusting a vehicle body height corresponding to another wheel, where the another wheel is a wheel in the vehicle other than the first wheel.

In one embodiment of the present disclosure, the posture adjustment module 6200 may further include:

a first adjustment unit, configured to adjust the center of mass to be within the target area, where the target area is the area other than the area of the first wheel; and
a second adjustment unit, configured to adjust the position of the center of mass in the target area, so that the load of the first wheel is zero.

In one embodiment of the present disclosure, the first adjustment unit is further configured to:

adjust a vehicle body height corresponding to the second wheel of the vehicle to a first target height; and
adjust a vehicle body height corresponding to the third wheel of the vehicle to a second target height.

The second wheel and the first wheel are located on the same connection axle of the vehicle, the third wheel and the first wheel are located on the same side of the vehicle, and the first target height is greater than the second target height.

In one embodiment of the present disclosure, the second adjustment unit is further configured to:
lower a vehicle body height corresponding to a fourth wheel of the vehicle, so that the load of the first wheel is zero, where the fourth wheel and the first wheel are disposed diagonal to each other in the vehicle.

In one embodiment of the present disclosure, the vehicle control apparatus 6000 further includes:
a tilt angle adjustment module, configured to adjust a tilt angle of a vehicle body relative to a ground, so that an absolute value of the tilt angle is less than or equal to an angle threshold.

The posture adjustment module 6200 is further configured to:
adjust the position of the center of mass and the tilt angle until the absolute value of the tilt angle is less than or equal to the angle threshold and the load of the first wheel is zero.

In one embodiment of the present disclosure, the tilt angle adjustment module is further configured to:
detect the tilt angle of the vehicle body relative to the ground; and when the absolute value of the tilt angle is greater than the angle threshold, adjust the vehicle body height corresponding to the fourth wheel of the vehicle until the absolute value of the tilt angle is less than or equal to the angle threshold, where the fourth wheel and the first wheel are disposed diagonal to each other in the vehicle.

In one embodiment of the present disclosure, the vehicle control apparatus 6000 further includes:
a wheel lifting module, configured to control the first wheel to be lifted when the load of the first wheel is zero, so that the first wheel leaves the ground.

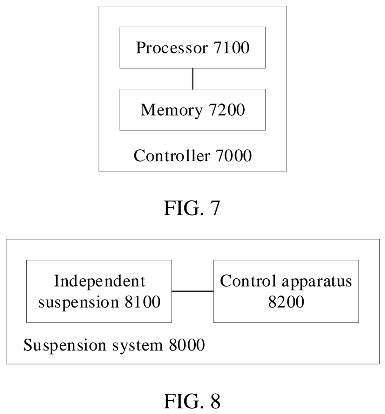

FIG. 7 is a block diagram of a controller according to an embodiment of the present disclosure.

As shown in FIG. 7, the controller 7000 includes a memory 7200 and a processor 7100. The memory 7200 stores a computer program, and the computer program is used to control the processor 7100 to operate to execute the method according to any embodiment of the present disclosure.

This embodiment also provides a suspension system. In one example, the suspension system 8000 may be, for example, the suspension system 1000 shown in FIG. 1.

In another example, as shown in FIG. 8, the suspension system 8000 may include an independent suspension 8100 and a control apparatus 8200. The independent suspension 8100 includes a shock absorber connecting a vehicle body of a vehicle and each wheel. The control apparatus 8200 is configured to determine a first wheel of the vehicle and control an action of at least one shock absorber to adjust a position of a center of mass of the vehicle, so that a load of the first wheel is zero, where the first wheel is a wheel with zero target load.

In one embodiment, the control apparatus 8200 may be the foregoing vehicle control apparatus 6000, or may be the foregoing controller 7000.

The at least one shock absorber whose action is controlled by the control apparatus 8200 may include at least one of a shock absorber corresponding to a second wheel, a shock absorber corresponding to a third wheel, and a shock absorber corresponding to a fourth wheel. Based on this, a shock absorber corresponding to the first wheel may also be included.

This embodiment further provides a vehicle. The vehicle may include the controller, the vehicle control apparatus, or the suspension system described in the foregoing embodiments.

The vehicle may be a two-wheel drive or four-wheel drive vehicle with independent suspensions on front and rear axles.

The vehicle in this embodiment may be a fuel vehicle or a vehicle equipped with a power battery. Specifically, the vehicle may be a pure electric vehicle or a hybrid electric vehicle.

In one example, the vehicle may also have at least one of other hardware structures such as an engine, a motor controller, a sensing apparatus, an input apparatus, an interface apparatus, an output apparatus, a motor, a power battery, and the like. This is not limited herein.

A rear end of the engine (one end connected to a flywheel) may be connected to an input end of a reducer through a clutch, and an output end of the reducer is connected to a wheel axle, so that a wheel can be driven, by the engine, to rotate.

The motor controller is configured to control an action of the motor based on control instructions sent by the processor. For example, the mother controller controls the motor to output a torque to drive the wheel axle to rotate. For another example, the motor controller controls the motor to feed electric energy back to the power battery, and the like.

The sensing apparatus may include various sensors, for example, at least one of a rotational speed sensor, a posture sensor, a temperature sensor, a humidity sensor, a pressure sensor, and the like.

The input apparatus may include a key circuit, a touch screen, a microphone, a knob circuit, an accelerator control apparatus with an accelerator pedal, a brake control apparatus with a brake pedal, and the like.

The interface apparatus may include a headset jack, a diagnostic interface of an on-board diagnostics (on board diagnostics, OBD) system, a charging interface, a USB interface, and the like.

The output apparatus may include a display screen, a speaker, various indicators, and the like.

When the motor is used as an electric motor, the power battery may be configured to provide electric energy to the motor.

This embodiment provides a computer-readable storage medium. The storage medium stores a computer program. When the computer program is executed by a processor, the method described in any method embodiment of the present disclosure is executed.

The present disclosure may be a system, a method, and/or a computer program product. The computer program product may include a computer-readable storage medium carrying computer-readable program instructions for enabling a processor to implement various aspects of the present disclosure.

**Claims**

1. A vehicle control method, wherein the method comprises:

    determining a first wheel of a vehicle, the first wheel being a wheel with zero target load; and adjusting a position of a center of mass of the vehicle by adjusting a vehicle body posture of the vehicle, so that a load of the first wheel is zero.

2. The method according to claim 1, wherein the adjusting the position of the center of mass of the vehicle by adjusting the vehicle body posture of the vehicle comprises:
adjusting the position of the center of mass in a target area, the target area being an area other than an area of the first wheel.

3. The method according to claim 2, wherein the target area is defined, so that in a length direction of the vehicle, a distance between the first wheel and the center of mass is greater than a distance between a third wheel and the center of mass, wherein the third wheel and the first wheel are located on a same side of the vehicle; or
the target area is defined, so that in a width direction of the vehicle, a distance between the first wheel and the center of mass is greater than a distance between a second wheel and the center of mass, wherein the second wheel and the first wheel are located on a same connection axle of the vehicle.

4. The method according to any one of claims 1 to 3, wherein the adjusting the position of the center of mass of the vehicle by adjusting the vehicle body posture of the vehicle comprises:
adjusting the vehicle body posture by adjusting a vehicle body height corresponding to another wheel, wherein the another wheel is a wheel in the vehicle other than the first wheel.

5. The method according to any one of claims 1 to 4, wherein the adjusting the position of the center of mass of the vehicle by adjusting the vehicle body posture of the vehicle, so that the load of the first wheel is zero comprises:

    adjusting the center of mass to be within the target area, the target area being the area other than the area of the first wheel; and

adjusting the position of the center of mass in the target area, so that the load of the first wheel is zero.

6. The method according to claim 5, wherein the adjusting the center of mass of the vehicle to be within the target area comprises:

adjusting a vehicle body height corresponding to the second wheel of the vehicle to a first target height; and
adjusting a vehicle body height corresponding to the third wheel of the vehicle to a second target height, wherein
the second wheel and the first wheel are located on the same connection axle of the vehicle, the third wheel and the first wheel are located on the same side of the vehicle, and the first target height is greater than the second target height.

7. The method according to claim 5 or 6, wherein the adjusting the position of the center of mass in the target area, so that the load of the first wheel is zero comprises:
lowering a vehicle body height corresponding to a fourth wheel of the vehicle, so that the load of the first wheel is zero, wherein the fourth wheel and the first wheel are disposed diagonal to each other in the vehicle.

8. The method according to any one of claims 1 to 7, wherein the method further comprises:

adjusting a tilt angle of a vehicle body relative to a ground, so that an absolute value of the tilt angle is less than or equal to an angle threshold; and
the adjusting the position of the center of mass by adjusting the vehicle body posture, so that the load of the first wheel is zero comprises:
adjusting the position of the center of mass and the tilt angle until the absolute value of the tilt angle is less than or equal to the angle threshold and the load of the first wheel is zero.

9. The method according to claim 8, wherein the adjusting the tilt angle of the vehicle body relative to the ground, so that the absolute value of the tilt angle is less than or equal to the angle threshold comprises:

detecting the tilt angle of the vehicle body relative to the ground; and
when the absolute value of the tilt angle is greater than the angle threshold, adjusting the vehicle body height corresponding to the fourth wheel of the vehicle until the absolute value of the tilt angle is less than or equal to the angle threshold, wherein
the fourth wheel and the first wheel are disposed diagonal to each other in the vehicle.

10. The method according to any one of claims 1 to 9, wherein the method further comprises:
controlling the first wheel to be lifted when the load of the first wheel is zero, so that the first wheel leaves the ground.

11. A suspension system, comprising:

an independent suspension, the independent suspension comprising a shock absorber connecting a vehicle body of a vehicle and each wheel; and
a control apparatus, the control apparatus being configured to determine a first wheel of the vehicle and control an action of at least one shock absorber to adjust a position of a center of mass of the vehicle, so that a load of the first wheel is zero, wherein the first wheel is a wheel with zero target load.

12. A controller, comprising a memory and a processor, wherein the memory stores executable instructions, and the instructions are used to control the processor to operate to execute the method according to any one of claims 1 to 10.

13. A vehicle, comprising the suspension system according to claim 11 or the controller according to claim 12.

14. A vehicle control apparatus, comprising:

a wheel determining module, configured to determine a first wheel of a vehicle, the first wheel being a wheel with zero target load; and
a posture adjustment module, configured to adjust a position of a center of mass of the vehicle by adjusting a vehicle body posture of the vehicle, so that a load of the first wheel is zero.

15. A computer-readable storage medium, storing a computer program, the computer program, when being executed by a processor, implementing the method according to any one of claims 1 to 10.

FIG. 1

FIG. 2

| Determine a first wheel of a vehicle, where the first wheel may be a wheel whose target load is zero | S3100 |
|---|---|

↓

| Adjust a position of a center of mass of the vehicle by adjusting a vehicle body posture, so that a load of the first wheel is zero | S3200 |
|---|---|

## FIG. 3

(In front of a vehicle)

## FIG. 4

FIG. 5a

FIG. 5b

FIG. 6

Processor 7100

Memory 7200

Controller 7000

FIG. 7

Independent suspension 8100

Control apparatus 8200

Suspension system 8000

FIG. 8

## INTERNATIONAL SEARCH REPORT

| International application No. |
|---|
| **PCT/CN2023/128510** |

**A. CLASSIFICATION OF SUBJECT MATTER**

B60G 17/016(2006.01)i

According to International Patent Classification (IPC) or to both national classification and IPC

**B. FIELDS SEARCHED**

Minimum documentation searched (classification system followed by classification symbols)

IPC: B60G, B60R

Documentation searched other than minimum documentation to the extent that such documents are included in the fields searched

Electronic data base consulted during the international search (name of data base and, where practicable, search terms used)

CNTXT, ENTXT, VEN, CJFD: 车辆, 爆胎, 车轮, 质心, 载荷, 高度, vehicle, wheel, center, mass, load, height, flat, tire, puncture, blowout

**C. DOCUMENTS CONSIDERED TO BE RELEVANT**

| Category* | Citation of document, with indication, where appropriate, of the relevant passages | Relevant to claim No. |
|---|---|---|
| PX | CN 116890591 A (CHINA FAW GROUP CO., LTD.) 17 October 2023 (2023-10-17) description, specific embodiments, and figures 1-4 | 1-15 |
| X | CN 111824048 A (BYD CO., LTD.) 27 October 2020 (2020-10-27) specific embodiments, and figures 1-6 | 1-15 |
| X | CN 106364481 A (JILIN UNIVERSITY) 01 February 2017 (2017-02-01) specific embodiments, and figures 1-6 | 1-15 |
| A | CN 101712264 A (ZHEJIANG GEELY AUTOMOBILE RESEARCH INSTITUTE CO., LTD. et al.) 26 May 2010 (2010-05-26) entire document | 1-15 |
| A | CN 108216194 A (FORD GLOBAL TECHNOLOGIES, LLC) 29 June 2018 (2018-06-29) entire document | 1-15 |
| A | CN 108501944 A (LYU SHAN et al.) 07 September 2018 (2018-09-07) entire document | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 January 2024** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/128510** |

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | CN 109720336 A (GREAT WALL MOTOR COMPANY LIMITED) 07 May 2019 (2019-05-07) <br> entire document | 1-15 |
| A | CN 110001339 A (JIANGSU UNIVERSITY) 12 July 2019 (2019-07-12) <br> entire document | 1-15 |
| A | CN 110239519 A (GUILIN UNIVERSITY OF ELECTRONIC TECHNOLOGY) 17 September 2019 (2019-09-17) <br> entire document | 1-15 |
| A | CN 111703268 A (CHINA FAW GROUP CO., LTD.) 25 September 2020 (2020-09-25) <br> entire document | 1-15 |
| A | CN 112141078 A (SHANDONG BAOYA NEW ENERGY VEHICLE CO., LTD.) 29 December 2020 (2020-12-29) <br> entire document | 1-15 |
| A | CN 115042860 A (CHINA FAW GROUP CO., LTD.) 13 September 2022 (2022-09-13) <br> entire document | 1-15 |
| A | CN 1221687 A (LYU SHAN) 07 July 1999 (1999-07-07) <br> entire document | 1-15 |
| A | CN 1341519 A (LYU SHAN) 27 March 2002 (2002-03-27) <br> entire document | 1-15 |
| A | DE 10157426 A1 (BROETZ JOACHIM) 12 June 2003 (2003-06-12) <br> entire document | 1-15 |
| A | DE 102005005724 A1 (DAIMLER CHRYSLER AG) 10 August 2006 (2006-08-10) <br> entire document | 1-15 |
| A | DE 10357254 A1 (KNORR-BREMSE SYSTEME FUER NUTZFAHRZEUGE GMBH) 30 June 2005 (2005-06-30) <br> entire document | 1-15 |
| A | DE 3434757 A1 (SIEMENS AG) 03 April 1986 (1986-04-03) <br> entire document | 1-15 |
| A | US 2010044976 A1 (RADES MATTHEW JAMES et al.) 25 February 2010 (2010-02-25) <br> entire document | 1-15 |

Form PCT/ISA/210 (second sheet) (July 2022)

# EP 4 656 419 A1

<table>
<tr><td colspan="2">INTERNATIONAL SEARCH REPORT<br>Information on patent family members</td><td>International application No.<br><br>**PCT/CN2023/128510**</td></tr>
</table>

| Patent document cited in search report | | | Publication date (day/month/year) | Patent family member(s) | | | Publication date (day/month/year) |
|---|---|---|---|---|---|---|---|
| CN | 116890591 | A | 17 October 2023 | None | | | |
| CN | 111824048 | A | 27 October 2020 | None | | | |
| CN | 106364481 | A | 01 February 2017 | None | | | |
| CN | 101712264 | A | 26 May 2010 | None | | | |
| CN | 108216194 | A | 29 June 2018 | DE | 102017129762 | A1 | 14 June 2018 |
| | | | | GB | 201720179 | D0 | 17 January 2018 |
| | | | | GB | 2559652 | A | 15 August 2018 |
| | | | | US | 2018162411 | A1 | 14 June 2018 |
| | | | | US | 10266181 | B2 | 23 April 2019 |
| | | | | MX | 2017016082 | A | 09 November 2018 |
| | | | | RU | 2017143561 | A | 13 June 2019 |
| CN | 108501944 | A | 07 September 2018 | None | | | |
| CN | 109720336 | A | 07 May 2019 | None | | | |
| CN | 110001339 | A | 12 July 2019 | None | | | |
| CN | 110239519 | A | 17 September 2019 | None | | | |
| CN | 111703268 | A | 25 September 2020 | None | | | |
| CN | 112141078 | A | 29 December 2020 | None | | | |
| CN | 115042860 | A | 13 September 2022 | None | | | |
| CN | 1221687 | A | 07 July 1999 | None | | | |
| CN | 1341519 | A | 27 March 2002 | None | | | |
| DE | 10157426 | A1 | 12 June 2003 | None | | | |
| DE | 102005005724 | A1 | 10 August 2006 | None | | | |
| DE | 10357254 | A1 | 30 June 2005 | DE | 10357254 | B4 | 13 November 2014 |
| DE | 3434757 | A1 | 03 April 1986 | None | | | |
| US | 2010044976 | A1 | 25 February 2010 | US | 7735838 | B2 | 15 June 2010 |

Form PCT/ISA/210 (patent family annex) (July 2022)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310380800 X